Europäisches Patentamt

European Patent Office

Office européen des brevets

(11) Publication number: **0 328 950**
**A1**

# EUROPEAN PATENT APPLICATION

(21) Application number: 89101818.6

(22) Date of filing: 02.02.89

(51) Int. Cl.⁴: **C09D 5/03 , C08L 67/00 , C08L 33/04 , C07C 67/03 , C08F 8/14 , C08F 8/12**

(30) Priority: 18.02.88 US 157249
12.09.88 US 242544
12.09.88 US 242817
03.10.88 US 251762

(43) Date of publication of application:
23.08.89 Bulletin 89/34

(84) Designated Contracting States:
AT BE CH DE ES FR GB GR IT LI LU NL SE

(71) Applicant: THE GLIDDEN COMPANY
900 Huntington Building 925 Euclid Avenue
Cleveland Ohio 44115(US)

(72) Inventor: Craun, Gary P.
409 Crescent Drive
Berea Ohio 44017(US)
Inventor: Trumbo, David L.
6935 York Road
Parma Heights Ohio 44130(US)

Inventor: Telford, David J.
3156 Meadowbrook Boulevard
Cleveland Heights Ohio 44118(US)
Inventor: Sobek, Susan M.
3520 Lona Lane
Brunswick Ohio 44212(US)
Inventor: Berghoff, Wellington F.
3526 Richmond Road
Beachwood Ohio 44122(US)
Inventor: Bode, Daniel
2923 Jay Avenue
Cleveland Ohio 44118(US)
Inventor: Robinson, Peter V.
156 Bath Road
Medina Ohio 44256(US)

(74) Representative: Baillie, Iain Cameron et al
c/o Ladas & Parry Isartorplatz 5
D-8000 München 2(DE)

(54) **Coating composition.**

(57) A protective surface coating composition containing a catalytic amount of a transesterification catalyst, where the coating composition contains a polymeric binder adapted to crosslink by transesterification upon heat curing, the coating composition comprising:

a polymeric binder containing hydroxyl functional groups and lower alkyl ester carboxylic ester functional groups adapted to transesterify and crosslink in the presence of a transesterification catalyst; said transesterification catalyst comprising on the basis of 100 weight parts of said polymeric binder betwen 1 and 20 weight parts of catalytic epoxy compound containing oxirane functionality in combination with 0.1 to 10 weight parts of (a) a conjugate base of a weak acid comprising an inorganic cation salt, where the conjugate base of a weak acid has a pka between 2.5 and 14; or (b) an inorganic salt having an inorganic cation selected from sodium, potassium, lithium, calcium, and iron and an inorganic anion selected from a halogen, azide, cyanide or hydroxide; where said polymeric binder is substantially free of carboxyl groups and is adapted to cure by transesterification.

## TRANSESTERIFICATION CURE OF THERMOSETTING COATINGS

This invention pertains to thermosetting paint coatings and particularly coatings based on a transesterification cure mechanism activated by certain transesterification catalysts to activate an ester functional polymer to crosslink with a hydroxyl functional polymer to produce an improved paint film. The transesterification catalyst comprises a catalyst combination of a catalytic epoxy compound having oxirane functionality and a nucleophile selected from a conjugate base of a weak acid or an inorganic salt containing an inorganic anion and inorganic cation. Preferred hydroxyl polymers and ester polymers comprise beta-hydroxy ester polymers.

## BACKGROUND OF THE INVENTION

Transesterification of a simple ester compound with a simple alcohol compound is known to occur under basic conditions. The transesterification reaction is an equilibrium reaction which can be driven to completion by removing the alcohol moiety evolving from the cleaved ester. If the cleaved alcohol moiety is a low molecular weight lower alkyl alcohol such as methanol or ethanol, removal by evaporation is quite easy. It has been found that transesterification as a curing mechanism for crosslinking polymers used in paint coatings provides an attractive cure mechanism for producing thermosetting protective coatings since cleaved lower alkyl alcohols can be easily removed from the coating by simple air dry evaporation thereby driving the transesterification reaction to completion.

Related U.S. patents are as follows:

U.S. 4,749,728 discloses hydroxyl functional polymers adapted to cure by transesterification with a carboxylic ester functional polymer in the presence of transesterification catalysts. The transesterification catalysts comprise an onium salt or a Lewis base in combination with a catalytic amount of epoxy compound. U.S. 4,742,096 pertains to powder coatings cured by transesterification catalysts of epoxy resin and onium salts.

With respect to prior art, several patents disclose the use of acids, bases, metal salts, and organic metal complexes as catalysts for transesterifying polymers such as U.S. 4,362,847; U.S. 4,376,848; U.S. 4,332,711; and U.S. 4,459,393 wherein octoates or naphthenates of lead, zinc, calcium, barium, and iron are disclosed as transesterification catalysts.

Green U.S. 4,559,180 discloses an organic syntheses process for simple transesterification of very low molecular weight simple carboxyl ester compounds with similar simple alcohols by reacting the same in the presence of an epoxide and a Lewis base (containing a Group V element) or a cyclic amidine. The Green patent does not pertain to coatings or polymers but merely discloses simple chemical reactions between very low molecular weight chemical compounds.

Dante and Parry have shown that phosphonium halides, such as ethyltriphenyl phosphonium iodide, are efficient catalysts for (a) 1,2-epoxide reactions with phenols to yield hydroxyl ethers (U.S. 3,477,990), and (b) polyepoxide reactions with carboxylic acids or acid anhydrides (U.S. 3,547,885). The patents suggest that polyepoxides and phenols can be reacted to form phenolic hydroxyl ethers with phosphonium salts as catalysts. The counterion of the phosphonium moiety is the anion portion of a carboxylic acid, or acid ester, such as in ethyltriphenyl phosphonium acetate (U.S. 3,948,855).

Barnhoorn et al (U.S. 4,459,393) teach self-crosslinking thermosetting resin compositions obtained from the reaction of a beta-hydroxyalkyl ester of an alpha, beta-carboxylic acid with a primary mono- or polyamide to give a product having 1 to 2 amino hydrogens and further reacted with a polyglycidyl ether of a polyhydric phenol so that the final resin adduct has more than one beta-hydroxyalkyl ester group of amine groups having 1 to 2 amine hydrogen atoms per molecule. Transesterification catalysts known in the art are taught.

Subramanyam et al (U.S. 4,376,848) teach the preparation of water dilutable electrocoating compositions having tertiary amino-containing basic binders by reacting a secondary amino group compound with an olefinically double-bonded epoxy and the copolymerization of this product with at least one ethylenically bonded polymerizable monomer wherein said binders can self-cure and be cured in combination with amine resins and/or phenolic resins. Common transesterification catalysts are taught.

Velko patents disclose resinous compositions curable through a transesterification curing mechanism based on conventional heavy metal catalysts. For instance, U.S. 4,423,167 discloses a polymeric polyol adapted to be crosslinked with a polyester having at least two beta-alkoxyester groups in the presence of conventional transesterification catalysts. Similarly, U.S. 4,489,182 is based on a crosslinking agent having

2

at least two delta-hydroxy ester groups, while U.S. 4,423,169 is based on a crosslinking agent having at least two beta- and/or gamma-ester groups, and U.S. 4,423,168 is based on a crosslinking agent having at least two beta-amide ester groups. The Velko patents utilize as catalysts organic salts of conventional heavy metal catalysts such as lead, zinc, iron, tin and manganese.

In accordance with this invention, highly desirable thermosetting paint coatings are based on a polymeric binder comprising a hydroxyl functional polymer, adapted to be crosslinked by transesterification with an ester functional polymer upon being activated with a catalyst comprising certain nucleophiles in combination with a catalytic amount of epoxy compound. Beta-hydroxy esters are preferred instead of simple methylesters as the crosslinking component which provides a significant improvement in film properties. The transesterification crosslinking system of this invention is particularly useful in powder coatings, high solids liquid coatings, appliance coatings and thermosetting coatings generally. A particularly good balance of hardness and flexibility properties in film integrity characteristics can be achieved which is particularly important in a variety of industrial coating applications. Films with exceptional hardness and impact resistance can be prepared, for example, by blending as little as 5% hydroxyl functional polyesters into acrylics. These and other advantages of this invention will become more apparent by referring to the detailed description and illustrative examples.

Briefly, the invention pertains to thermosetting protective paint coatings based on a polymeric binder combination of a hydroxyl functional polymer adapted to be crosslinked with a beta hydroxy ester addition copolymer of copolymerized monomers where coreaction is activated by a transesterification catalyst combination of certain nucleophiles and a catalytic amount of epoxy compound. The thermosetting polymeric binder combination comprises by weight between about 2% and 50% hydroxyl functional polymer and between 50% and 98% ester functional polymer. The catalyst combination comprises between 1 and 20 weight parts of catalytic epoxy compound combined with 0.1 to 10 weight parts of certain nucleophiles per 100 weight parts of matrix binder. The polymers are adapted to cure by transesterification in the presence of transesterification catalysts comprising a conjugate base of a weak acid having pka between 2.5 and 14 in combination with a catalytic amount of epoxy compound or adapted to be cured by transesterification in the presence of transesterification catalysts comprising an inorganic salt selected from halogens, azides, cyanides, hydroxides in combination with a catalytic amount of epoxy compound . Preferred polymeric binders adapted to crosslink by transesterification are based on polyester polymer containing a beta-hydroxy ester group activated by certain transesterification catalysts to crosslink with hydroxyl groups on polymers; or are based on a self-curing acrylic polymer containing beta-hydroxy ester groups adapted to coreact upon being activated by certain transesterification catalysts or are based on thermosetting polymers comprising a hydroxyl functional polyester polymer adapted to be crosslinked with a beta-hydroxy ester acrylic copolymer.

## DETAILED DESCRIPTION OF THE INVENTION

The invention is based on a transesterification catalyst comprising the combination of certain nucleophilic catalysts and a catalytic epoxy resin utilized to activate a transesterification cure between a polymer containing a carboxyl ester ("ester polymer") and a polymer containing hydroxyl groups ("hydroxyl polymer").

The nucleophilic compound cocatalyst can be selected from a conjugate base of a weak acid having a pka between about 2.5 and 14; or an inorganic salt of a halide, an azide, a cyanide or hydroxide.

Referring first to the conjugate bases of a weak acid used in conjunction with catalytic epoxy resin to form the transesterification catalyst in accordance with this invention, suitable conjugate bases comprise various salts of the weak acids and such salts include sodium, potassium, calcium, lithium, and similar other metal salts. Suitable weak acids include weak organic and inorganic acids having a pka between 2.5 and 14 and preferably between 2.5 and 10, where pka is a measure of the strength of these weak acids which are often referred to as Bronsted acids. In contrast, strong acids such as hydrochloric, nitric, and sulfuric acids, and similar strong acids, have a pka less than 2.5 whereby the conjugated bases of these stronger acids do not provide suitable cocatalysts in accordance with this invention. In this regard, the strong acids dissociate easily in water to generate base anions and hydrogen ions (H +) and hence are unsuitable as cocatalysts.

Conjugate bases of weak acids, such as acetic acid, benzoic acid, and boric acid, comprise the acetate, benzoate, and borate ions. Conjugate bases of weak acids can be prepared by neutralizing the acids, such as benzoic acids, with a strong mineral base, such as KOH, to form the salt, potassium benzoate. Conjugate bases of weak organic acids include sodium benzoate, potassium acetate, potassium laurate, and sodium and potassium salts of polymeric materials. Examples of carboxylic polymeric materials include acrylic which contain salts of methacrylic acid, acrylic acid, maleic anhydride and the like (salts of these acid can be prepared with bases like KOH or NaOH before or after polymerization), and polyesters which have unreacted carboxylic acid, such as polyesters prepared from isophthalic acid, adipic acid, azeleic acid, and the like with the common diols and polyols. Conjugate bases of weak inorganic acids include substances like potassium and sodium borate, and $K_2HPO_4$. In the case of polyfunctional acids like $H_3PO_4$, the acids have to be neutralized to the conjugate bases of the appropriate strength. $KH_2PO_4$ is not a suitable cocatalyst, for instance. Conjugate bases of weak acids can be produced by reacting a weak organic acid with a base to form the conjugate base (and water). Acetic acid, for instance, reacts directly with potassium hydroxide to form the conjugate base potassium acetate. Weak acids include acetic, benzoic, formic, lauric and other carboxylic acids and polycarboxylic acids; phenol, chlorophenols, and nitrophenol and various other substituted phenols; and various inorganic acids, such as boric acid, dipotassium phosphate, and sodium silicate. The conjugate bases of these weak acids act as cocatalysts with epoxy compounds to provide transesterification as a cure mechanism for coatings.

Referring next to the transesterification catalysts based on an inorganic salt of a halide, an azide, a cyanide, or a hydroxide, suitable inorganic salts are derived from inorganic cations other than onium salts such as sodium, potassium, lithium, calcium and iron combined with inorganic anions selected from halogens including chlorides, bromides, and iodides, as well as azides, cyanides, and hydroxides. The inorganic salts can be combined with catalytic epoxy resin to activate a transesterification cure in accordance with this invention.

The foregoing nucleophilic catalytic compounds are combined with a catalytic amount of epoxy resin compound containing oxirane functionality hereinafter described to provide the transesterification catalyst combination in accordance with this invention.

Referring next to the epoxy resin containing oxirane functionality used as a cocatalyst with the monovalent inorganic salts, catalytic epoxy resins can be a monomeric or polymeric epoxide selected from the group consisting of $C_{2-18}$ alkylene oxides, arylalkylene oxides, cycloaliphatic oxides, and a polymeric or oligomeric epoxide having at least one epoxide group per molecule. The epoxy compound cocatalyst can be an aliphatic, an aromatic or a glycidyl acrylic type epoxy compound. The most suitable catalytic epoxy resins comprise glycidyl ethers of bisphenol or glycidyl addition polymers. Glycidyl ethers of bisphenol include typically glycidyl ethers of polymers based on bisphenol A (or similar bisphenols) such as bisphenol A diglycidyl ether (Epon 828, Shell), and higher molecular weight versions, linear or branched, having one, two or more glycidyl groups per molecule. Glycidyl addition polymers comprise acrylic polymers containing copolymerized ethylenically unsaturated monomers including glycidyl methacrylate or glycidyl acrylate monomers. Other epoxy resins containing monofunctional oxirane are useful including oleic acid oxide, t-butyl phenyl glycidyl ether and the like.

Examples of catalytic epoxy resins useful for the cure catalyst include $C_{2-18}$ alkylene oxides and oligomers and/or polymers having epoxide functionality include multiple epoxy functionality. Particularly suitable alkylene oxides include propylene oxide, 1,2-butylene oxide, 1,2-hexylene oxide, tert-butyl glycidyl ether, phenyl glycidyl ether, glycidyl acetate, and glycidyl benzoate. Useful multifunctional oxiranes include Bisphenol A diglycidyl ether, diglycidyl adipate, 1,4-diglycidyl butyl ether, Novalac resins and other commercial epoxy resins. Bisphenol A diglycidyl ether is a preferred epoxide. Such epoxy resins comprise a lower molecular weight resin produced by bisphenols reacted with epichlorohydrin having a molecular weight between about 400 and 4000 as measured by GPC. Preferred epoxy resins comprise linear polymer chains of repeating units of diglycidyl compounds with various bisphenols such as bisphenol A or bisphenol-5. Also useful are acrylic polymers having epoxide functionality such as acrylic copolymers derived from glycidyl methacrylate. Oxirane compounds can include isobutylene oxide (2-methyl-1, 2-propene oxide), 2-methyl-1,2-hexene oxide, 2-phenyl-1, 2-propene oxide (alpha-methyl styrene oxide), 2-phenoxy methyl-1, 2-propene oxide, and the like. Other oxiranes include 2,3-dimethyl-2-butene oxide, 2-methyl-2-butene oxide, oleic acid oxide, and 1-phenyl propene oxide.

The catalyst combination can comprise on a weight basis between 0.1 and 20 of a nucleophile catalyst with 1 to 20 weight parts of catalytic epoxy resin per 100 weight parts of matrix thermosetting binder comprising the beta-hydroxy ester copolymer and the coreactive hydroxyl polymer. The catalyst combination is added to the coreactive matrix polymers at a preferred level between 2 and 40 weight parts catalyst combination per 100 weight parts coreactive matrix polymers.

Referring next to the binder matrix polymers useful in this invention and adapted to be transesterified, the useful matrix polymer comprise a wide range of polymers, provided that polymer chains contain a carboxyl ester structure and a hydroxyl functional group. Useful coatings include solvent or water dispersed polymers comprising a wide variety of monomers, oligomers, and resins having the requisite hydroxyl and/or ester functionality including polyesters, polyacrylates, polyepoxides, polyamides, polyamines,

EP 0 328 950 A1

polyurethanes, monoalcohols, monoesters, polyols and mixtures thereof. Patents disclosing useful ester polymers and hydroxyl polymer adapted to be coreacted in a transesterification reaction include U.S. 4,489,182, U.S. 4,362,847 and U.S. 4,332,711 which disclose non-acidic, hydroxyl polymers and non-acid polyester polymer having beta-ester groups and said patents are incorporated herein by reference. Further patents include U.S. 4,376,848 and U.S. 4,459,393 pertaining to hydroxyl and ester polymers. Films prepared from blends of polyesters containing hydroxyls and esters of low boiling alcohols have good physical properties and exceptionally low raw material costs.

Hydroxyl functional polyesters with two or more, preferably three or more, primary hydroxyls per molecule (average composition) can be cured in accordance with this invention with diesters such as diethylsuccinate, dimethyl adipate, etc., and/or polyesters with terminal esters of low boiling alcohols such as the reaction products of these diesters with diols, triols, etc. Cure with a diester has the advantage that the system is of low viscosity. No solvents are needed in addition to the reactive diesters. Useful aliphatic diesters include dimethyl glutarates, dimethyl-succinate, dimethyl adipate, diethyl adipate, diisopropyl sebacate and the like. Aromatic esters of use include dimethyl isophthalate, dimethyl terephthalate, diethyl isophthalate, diethyl terephthalate, trimethyl1,3,5-benzene tricarboxylate, trimethyl-1,3,5-naphthalene tricarboxylate and the like. Cycloaliphatic esters can include for example, dimethyl, diethyl or dipropyl 1,4-cyclohexane dicarboxylate, 1,3-cyclohexane dicarboxylate, and trimethyl 1,3,5-cyclohexane tricarboxylate. More complex polyfunctional ester compounds can include those mixtures that arise from condensation of the above simple ester compounds with diols, polyols, diamines and amino alcohols wherein an excess of ester functionality is mentioned so as to provide soluble or fusible adducts.

Polyesters are generaly prepared with mixtures of aromatic dicarboxylic acids and linear saturated dicarboxylic acids having between 2 and 10 linear carbon atoms such as adipic, azelaic, succinic, glutaric, pimelic, suberic or sebacic acid to produce low molecular weight polyesters. Aromatic dicarboxylic acids (anhydrides) include phthalic, isophthalic, terephthalic, and tetrahydrophthalic. Suitable glycols include triols such as trimethylol propane, and trimethylol ethane, and other polyols such as pentaerythritol, and linear aliphatic glycols having 2 to 8 carbon atoms such as 1,3 or 1,4 butylene glycol, 1,6 hexane diol, neopentyl glycol, propylene glycol, diethylene or dipropylene glycols, and similar linear glycols. Useful hydroxyl functional polyesters can be prepared by the usual esterification procedures from (1) diols and polyols with dicarboxylic acids and polycarboxylic acids (2) by transesterification of diols and polyols with diesters and polyesters of carboxylic acids, or (3) by reactions in which both esterification and transesterification are used to form polyesters. On a molar basis, an excess of hydroxyl functionality is used to obtain hydroxy functional polymers. Small amounts of unreacted ester or acid remain in the polymers.

Polyesters with terminal ester functionality can be used to crosslink hydroxyl functional polyesters and/or diols and polyols. Ester functional polyesters can be prepared by esterification of diols and polyols with dicarboxylic acids, followed by esterification with diesters. Polyesters with both hydroxyl and terminal ester functionality are self-curing. They can be prepared by esterification of diols and polyols with diesters and polyesters of carboxylic acids, or by esterification of dicarboxylic acids with diols and polyols to low acid number, followed by esterification with diesters of carboxylic acids. Degree of reaction in self-cure polyesters must be controlled such that the product viscosity is in a practical range.

Polyesters generally are prepared with low acid numbers, less than 10, although higher acid numbers may aid in pigment dispersion. Molecular weights for solvent borne paints generally range from about 300 to 2000 number average molecular weight (as measured by GPC), while polyesters for powder paints may range up to 25,000 number average molecular weight or higher.

Hydroxyl functional epoxy polymers can be prepared from epoxy resin by reaction with a carboxylic acid which forms an ester and a hydroxyl group. This hydroxyl group formed on the backbone of the epoxy resin actively participates in transesterification crosslinking reactions. Self-curing resins can be derived from epoxy resins by reacting epoxy resins with monomethyl esters of dicarboxylic acids or anhydrides. Thus, succinic anhydride is combined with a slight molar excess of methanol, and warmed to form methyl succinate. The diglycidyl ether of Bisphenol A is then added to a 1:1 mole ratio of epoxy to carboxylic acid, and upon warming to 100-150°C, the epoxy oxirane group is consumed by the carboxylic acid. Epoxy resin with active glycidyl groups is then added with the conjugated base of a weak acid (such as potassium propionate) to catalyze the transesterification of the methyl ester and the backbone hydroxyl groups.

Hydroxyl functional addition polymers, and particularly acrylic polymers, can provide a hydroxyl functional polymer for the transesterification cure. Acrylic addition polymers are produced by copolymerization of ethylenically unsaturated monomers where peroxide or azo catalysts initiate copolymerization of the monomer double bonds. Polymerizable ethylenically unsaturated monomers contain carbon-to-carbon unsaturation and include vinyl monomers, acrylic monomers, allylic monomers and acrylamide monomers. Vinyl esters include vinyl acetate, vinyl propionate, vinyl butyrates, vinyl benzoates, vinyl isopropyl acetates

5

and similar vinyl esters. Vinyl halides include vinyl chloride, vinyl fluoride, and vinylidene chloride. Vinyl aromatic hydrocarbons include styrene, methyl styrenes and similar lower alkyl styrene, chlorostyrene, vinyl toluene, vinyl naphthalene, divinyl benzoate, and cyclohexane. Vinyl aliphatic hydrocarbon monomers include alpha olefins such as ethylene, propylene, isobutylene, and cyclohexene as well as conjugated dienes such as butadiene, methyl-2-butadiene, 1,3-piperylene, 2,3 dimethyl butadiene, isoprene, cyclopentadiene, and dicyclopentadiene. Vinyl alkyl ethers include methyl vinyl ether, isopropyl vinyl ether, n-butyl vinyl ether, and isobutyl vinyl ether.

Hydroxyl functional copolymers are produced by specifically copolymerizing hydroxylated monomers including hydroxy alkyl acrylates such as 2-hydroxy ethyl acrylate and methacrylate, 2-hydroxypropyl acrylate and methacrylate, and similar hydroxyl alkyl acrylates. Carboxyl functional monomers are avoided.

Acrylic monomers include monomers such as lower alkyl esters of acrylic or methacrylic acid having an alkyl ester portion containing between 1 to 12 carbon atoms as well as aromatic derivatives of acrylic and methacrylic acid. Useful acrylic monomers include, for example, acrylic and methacrylic acid, methyl acrylate and methacrylate, ethyl acrylate and methacrylate, butyl acrylate and methacrylate, propyl acrylate and methacrylate, 2-ethyl hexyl acrylate and methacrylate, cyclohexyl acrylate and methylacrylate, decyl acrylate and methacrylate, isodecylacrylate and methacrylate, benzyl acrylate and methacrylate, and various reaction products such as butyl, phenyl, and cresyl glycidyl ethers reacted with acrylic and methacrylic acids, hydroxyl alkyl acrylates and methacrylates such as hydroxyethyl and hydroxypropyl acrylates and methacrylates, as well as amino acrylates and methacrylates.

Hydroxyl functional polyurethane polymers can be transesterified with ester functional polymers in accordance with this invention. Hydroxyl functional polymers typically contain urethane groups in the polymer backbone and are produced by reacting excess equivalents of diol or polyol with lesser equivalents of di- or polyisocyanate. The polyisocyanates can be di- or triisocyanates such as for example 2,4 and 2,6 tolylene diisocyanate, phenylene diisocyanate; hexamethylene or tetramethylene diisocyanate, 1,5 naphthalene diisocyanate, ethylene or propylene diisocyanate, trimethylene or triphenyl or triphenylsulfone triisocyanate, and similar di- or triisocyanates. The polyisocyanate can be generally selected from the group of aliphatic, cyclo-aliphatic and aromatic polyisocyanates such as for example hexamethylene 1,6-diisocyanate, isophorone diisocyanate, diisocyanate, 1,4-dimethyl cyclohexane, diphenylmethane diisocyanate 2,4-tolylene diisocyanate, 2,6-tolylene diisocyanate and mixtures thereof, polymethylene polyphenyl polyisocyanate. Useful polyols preferably contain two or more hydroxyl groups for coreaction with the isocyanate groups. Useful polyols are: -diols such as ethylene glycol, propylene glycols, butylene glycols, neopentyl glycol, 14-cyclohexane dimethanol, hydrogenated bisphenol A, etc.; triols such as glycerol, trimethylol propane, trimethylol ethane; tetrols such as pentaerythritol; hexols such as sorbitol, dipentaerythritol, etc.; polyether polyols produced by the addition of alkylene oxides to polyols, polycaprolactone polyols produced by the addition of monomeric lactones to polyols, such as caprolactone; hydroxy terminated polyesters produced by condensation of any of the above polyols with polybasic acids in such ratio that the final condensate is substantially free from carboxyl acidity and has a molecular weight range up to about 500.

Other useful hydroxyl compounds comprise aliphatic polyols including ethylene glycol, propylene glycol, neopentyl glycol, 1,3-butylene glycol, 1,4-butane diol, 1,6-hexane diol, trimethylol propane, trimethylol ethane, glycerol, pentaerythritol, and the like. Various ether polyols can be used such as diethylene glycol, triethylene glycol, dipropylene glycol, dipentaerythritol and the like. Cycloaliphatic polyols can be used and include cyclohexane-1, 4-dimethylol sorbitol and the like. Aromatic based aliphatic polyols such as 1,3-dimethylol benzene, 1,4-dimethylol benzene, 1,3,5-trimethylol benzene, 1,2,5-trimethylol benzene and the like.

The molecular weight of both the ester polymers and the hydroxyl polymers adapted to be transesterified in accordance with this invention preferably are lower molecular weight polymers having number average molecular weight broadly between 200 and 50,000 and preferably between 500 and 20,000 as measured by gel permeation chromatography (GPC) in accordance with ASTM D 3016-78, ASTM D 3536-76, ASTM D 3593-80.

The presence of carboxylic acid functionality in the matrix polymers or coating will retard the onset of transesterification. If excessive amounts of carboxylic acid are present, the oxirane component will be entirely consumed without the formation of the catalytic intermediate necessary for transesterification, although the retarding effect of small quantities of carboxylic acid can be used advantageously to improve the package stability of the instant coating compositions. Hence, polymeric binders should be substantially free of carboxyl functionality and have an Acid No. less than 20 and preferably less than 10.

The polymeric polyol component of the coating compositions can be selected from a wide variety of hydroxyl group-containing polymers such as alkyd resins, polyester resins, hydroxyl group-containing

6

acrylic polymers, hydroxyl group-containing epoxy resins. The molecular weights of the polymeric polyols can vary over a wide range depending upon their type and on whether the coating composition is organic solvent based or aqueous based and also on the desired performance characteristics of the coating. Polyester, epoxy and alkyd resins can have molecular weights as low as about 200 and as high as about 50,000, but preferably are usually in the range of about 500 to 5,000. The hydroxyl content of the polymeric polyol should be sufficient to cure to a solvent-resistant coating. Generally, the hydroxyl number of the polymeric polyol will be at least about 40 and preferably will be in the range of about 100 to 300, based on resin solids. Examples of hydroxyl polymers useful as suitable crosslinking agents are those which are formed from reacting a polycarboxylic acid or its functional equivalent thereof with one or more polyols. Examples of suitable polycarboxylic acids include dicarboxylic acids such as saturated aliphatic dicarboxylic acids, for example, adipic acid and azelaic acid; aromatic acids such as isophthalic acid and terephthalic acid; ethylenically unsaturated dicarboxylic acids such as fumaric acid and itaconic acid, or functional equivalents of the acids such as anhydrides where they exist and lower alkyl esters of the acids can be used. Examples include succinic anhydride, phthalic anhydride and maleic anhydride.

Crosslinking agents can be formed from reacting the polycarboxylic acid or its functional equivalent thereof with polyols at an elevated temperature, usually reflux temperature, in the presence of an esterification catalyst such as an acid or a tin compound. Usually a solvent, for example, an azeotropic solvent such as toluene or xylene, is used. Reaction is continued with water being constantly removed until a low acid value, for example, 3 or less, is obtained. Diesters, triesters, and polyesters with terminal ester groups can be crosslinked with the catalyst combination of this invention when formulated with high hydroxyl content polyesters. Formulations with low molecular weight diesters can be prepared at 100% solids, with a loss of condensation by-product of about 10 to 25 weight percent by weight.

Beta-hydroxy ester polyester polymers are preferred polymers utilized in accordance with this invention to be self-crosslinking or to crosslink hydroxy functional polymers upon activation with transesterification catalysts comprising certain nucleophiles combined with a catalytic amount of an epoxy compound. A beta hydroxy ester is generally of the theoretical chemical structure as follows:

$$- \overset{\overset{\text{O}}{\|}}{\text{C}} - \text{O} - \text{CH}_2 - \text{CH}_2 - \text{OH}$$

where the hydroxyl group is attached to the second (beta) carbon atom relative to the ester group. The alpha or beta carbon atom can contain a substituted methyl group or similar short chain alkyl group instead of a hydrogen atom. The beta hydroxy ester group functions as an ester group upon crosslinking with a hydroxyl functional polymer which can be a similar polymer or a separate hydroxyl polymer. In theory, the ester group forms a loose seven-membered, hydrogen bonding ring with the beta-hydroxyl group, which is believed to weaken the beta-ester group and thus provide a weak ester bond to facilitate cleavage of the ester group by transesterification in accordance with this invention.

Beta-hydroxy ester polyester polymers typically can be produced by reacting a dicarboxylic acid compound with excess equivalents of an alpha, beta reactant such as ethylene or propylene oxide to produce a beta-hydroxy ester polyester polymer having at least two beta-hydroxy ester groups. Preferably, the dicarboxylic acid should comprise a dicarboxylic acid containing at least three carbon atoms and can include, for example, lower alkyl dicarboxylic acids such as malonic (propanedioic) acid, succinic acid, glutaric acid, adipic acid, pimelic acid, suberic acid, sebacic acid, as well as higher aliphatic dicarboxylic acids containing between 11 and 36 carbon atoms such as undecanedioic and dodecanedioic acids as well as tri-, tetra-, penta-, hexa-, hepta-, octa- decanedioic acids, dimerized fatty acids, and similar higher aliphatic dicarboxylic acids. Useful dicarboxylic acids can further include aromatic diacids or anhydrides such as phthalic acid or anhydride, isophthalic acid, terephthalic acid, tetrahydrophthalic acid or anhydride, and similar aromatic dicarboxylic acids. Useful carboxylic acids can further include trifunctional acids such as trimellitic anhydrides. The dicarboxylic acid component can be a carboxyl terminated low molecular weight polymer such as a linear polyester having a number average molecular weight measured by GPC between 200 and 2,000 and an Acid No. above 30 and preferably between 70 and 200. Carboxyl terminated low molecular weight polyesters can be produced by reacting a glycol with excess equivalents of aliphatic or aromatic dicarboxylic acid. As noted above, these carboxyl terminated polyester polymers (dicarboxylic compounds) can be reacted with excess equivalents of the alpha, beta reactant propylene or ethylene oxide to produce beta-hydroxy ester polyester polymers in accordance with this invention. Less preferred alkyl oxides can include lower alkyl glycidyl compounds having between about three and ten carbon atoms as well as very low molecular weight epoxy resins where these alkyl oxides contain a 1,2-epoxide group.

In a similar manner, dicarboxylic compounds including carboxyl terminated low molecular weight polyesters can be coreacted with an alpha, beta reactant cyclic carbonate such as ethylene or propylene carbonate to similarly produce the beta-hydroxy ester structure and resulting beta-hydroxy ester polyester polymer.

In a similar manner, beta-hydroxyl ester polyester polymers can be produced by reacting excess equivalents of 1,2-diol (alpha, beta reactant) such as ethylene glycol or propylene glycol with dicarboxylic compounds, especially dicarboxylic acid, or carboxyl terminated low molecular weight polyester, to produce the beta-hydroxyl ester structure. This method of producing beta-hydroxyl ester polyester polymer is less preferred since the polymeric structure is somewhat random with less reactive or non-reactive alpha, beta carbon atoms randomly copolymerized in the polyester backbone rather than favorably positioned as beta-hydroxyl ester end groups as is obtained by the ethylene or propylene oxide or cyclic carbonate reactions with dicarboxylic compounds and low molecular weight carboxyl polyesters previously described. Excess equivalents of 1,2-diol, however provides for reactive terminal beta hydroxy ester groups useful in this invention. Also, the alpha, beta diols can be added in the second stage of a polyester synthesis while the first stage can contain if desired, other conventional glycols.

Accordingly, the beta-hydroxy ester polyester polymer can comprise adducts of dicarboxylic compound (including carboxyl terminated low molecular weight polyesters) reacted with alpha, beta oxy reactants selected from ethylene or propylene oxide, cyclic ethylene or propylene carbonate, or ethylene propylene glycol. The molecular weight range of the alkyl oxide, or cyclic carbonate, or alpha, beta glycol determines the volatility of the cleaved groups being cleaved during the transesterification curing process. The dicarboxylic compounds are coreacted with excess equivalent amounts of alkyl oxide or cyclic carbonate or glycol to form polyester polymers containing terminal or pendant difunctional beta-hydroxy ester groups.

Preferred binders comprise self-curing acrylic copolymers containing both hydroxyl functionality and ester functionality in the form of a beta-hydroxy ester group which are activated to crosslink in the presence of certain transesterification catalyst in accordance with this invention.

In the self-curing acrylic copolymer, hydroxyl and ester groups in the form of a beta-hydroxyl ester group are introduced into an acrylic copolymer by copolymerizing ethylenically unsaturated monomers including a beta-hydroxy ester monomer along with acrylic monomers and other ethylenic monomers to form the beta-hydroxy ester acrylic copolymer.

Referring first to the beta-hydroxy ester monomer component, a beta hydroxy ester monomer is an ethylenically unsaturated monomer generally containing the theoretical beta-hydroxy ester chemical structure as follows:

$$R - \overset{\overset{O}{\|}}{C} - O - CH_2 - CH_2 - OH$$

where the hydroxyl group is attached to the second (beta) carbon atom relative to the ester group and R is an alkyl chain containing terminal ethylenic, carbon-to-carbon unsaturation. Any one of the hydrogens on the alpha or beta carbons can be substituted with a methyl group or similar short chain alkyl group. It is hypothesized that the ester group can form a loose six-membered, hydrogen bonding ring with the beta-hydroxyl group, which has been found to weaken the beta-ester group and provide a weak ester bond to facilitate cleavage of the ester group by transesterification in accordance with this invention. Other beta-hydroxyl ester groups in the same polymeric structure can function as a hydroxyl component which transesterifies with the weakened beta-ester group to form a transesterification crosslink between the beta ester and the beta hydroxyl groups of different beta-hydroxyl ester groups on the same acrylic polymer. Suitable beta hydroxy monomers can be produced by reacting an acrylic or methacrylic acid with ethylene oxide or propylene oxide to produce the beta-hydroxy ester structure in conjunction with an ethylenically unsaturated double bond. Beta-hydroxylate ester monomers include hydroxyl alkyl acrylates such as 2-hydroxy ethyl acrylate and methacrylate, 2-hydroxypropyl acrylate and methacrylate, and similar hydroxyl alkyl acrylates.

Beta-hydroxyl ester addition copolymers, and particularly acrylic copolymers, provide both the ester function and hydroxyl function for the transesterification cure. Acrylic copolymers are produced by copolymerization of ethylenically unsaturated monomers, including a beta-hydroxy monomer, where peroxide or azo catalysts initiate copolymerization of the monomer double bonds. Acrylic monomers include monomers such as lower alkyl esters or methacrylic acid having an alkyl ester portion containing between 1 to 12 carbon atoms as well as aromatic derivatives of acrylic and methacrylic acid. Useful acrylic monomers, include, for example, acrylic and methacrylic acid, methyl acrylate and methacrylate, ethyl acrylate and mthacrylate, butyl acrylate and methacrylate, propyl acrylate and methacrylate, 2-ethyl hexyl acrylate and methacrylate, cyclohexyl acrylate and methacrylate, decyl acrylate and methacrylate, isodecylacrylate and methacrylate, benzyl acrylate and methacrylate. Other ethylenically unsaturated monomers containing carbon-to-carbon unsaturation include vinyl monomers, allylic monomers and acrylamide monomers. Vinyl esters include vinyl acetate, vinyl propionate, vinyl butyrates, vinyl benzoates, vinyl isopropyl acetates, and similar vinyl esters. Vinyl halides include vinyl chloride, vinyl fluoride, and vinylidene chloride. Vinyl aromatic hydrocarbons include styrene, methyl styrenes and similar lower alkyl styrenes, chlorostyrene, vinyl toluene, vinyl naphthalene, divinyl benzoate, and cyclohexane. Vinyl aliphatic hydrocarbon monomers include alpha olefins such as ethylene, propylene, isobutylene, and cyclohex as well as conjugated dienes such as butadiene, methyl-2-butadiene, 1,3-piperlene, 2,3 dimethyl butadiene, isoprene, cyclopentadiene, and dicyclopentadiene. Vinyl alkyl ethers include methyl vinyl ether, isopropyl vinyl ether, v-butyl vinyl ether, and isobutyl vinyl ether. High levels of carboxyl functional monomers should be avoided.

In another preferred aspect of this invention, beta-hydroxy ester addition copolymers are utilized in accordance with this invention to crosslink with hydroxy functional polymers upon activation with transesterification catalysts comprising certain nucleophiles combined with a catalytic amount of an epoxy compound. The self-curing, beta-hydroxy addition copolymer contain hydroxyl and ester groups in the form of a beta-hydroxy ester group which are introduced into the copolymer by copolymerizing ethylenically unsaturated monomers, including a beta-hydroxy ester monomer, along with other ethylenic monomers where the inclusion of acrylic monomer is preferred and a beta hydroxy ester acrylic copolymer is preferred. Referring first to the beta-hydroxy ester monomer components, a beta hydroxy ester monomer is an ethyenically unsaturated monomer generally containing the theoretical beta-hydroxy ester chemical structure as follows:

$$R - \overset{\overset{\displaystyle O}{\displaystyle \|}}{C} - O - CH_2 - CH_2 - OH$$

where the hydroxyl group is attached to the second (beta) carbon atom relative to the ester group and R is an alkyl chain containing terminal ethylenic carbon-to-carbon unsaturation. Any one of the hydrogens on the alpha or beta carbons can be substituted with a methyl group or similar short chain alkyl group. It is hypothesized that the ester group can form a loose six-membered, hydrogen bonding ring with the beta-hydroxyl group, which is known to weaken the beta-ester group and provide a weak ester bond to facilitate cleavage of the ester group by transesterification in accordance with this invention. Other beta-hydroxy ester groups in the same polymeric structure can function as a hydroxyl component which transesterifies with the weakened beta-ester group to form a transesterification crosslink between the beta ester and the beta hydroxyl groups of different beta-hydroxyl ester groups on the same acrylic polymer. Suitable beta hydroxy monomers can be produced by reacting an acrylic or methacrylic acid with ethylene oxide or propylene oxide to produce the beta-hydroxy ester structure in conjunction with an ethylenically unsaturated double bond. Beta-hydroxylate ester monomers include hydroxyl alkyl acrylates such as 2-hydroxy ethyl acrylate and methacrylate, 2-hydroxypropyl acrylate and methacrylate, and similar hydroxyl alkyl acrylates.

Beta-hydroxyl ester addition polymers, and particularly acrylic copolymers, provide both the ester function and hydroxyl function for the transesterification cure. Acrylic copolymers are produced by copolymerizing of ethylenically unsaturated monomers, including a beta-hydroxy monomer, where peroxide or azo catalysts initiate copolymerization of the monomer double bonds. Acrylic monomers include monomers such as lower alkyl esters of acrylic or methacrylic acid having an alkyl ester portion containing between 1 to 12 carbon atoms as well as aromatic derivatives of acrylic and methacrylic acid. Useful acrylic monomers include, for example, acrylic and methacrylic acid, methyl acrylate and methacrylate, ethyl acrylate and methacrylate, butyl acrylate and methacrylate, propyl acrylate and methacrylate, 2-ethyl hexyl acrylate and methacrylate, cyclohexyl acrylate and methacrylate, decyl acrylate and methacrylate, isodecylacrylate and methacrylate, benzyl acrylate and methacrylate. Other ethylenically unsaturated monomers containing carbon-to- carbon unsaturation include vinyl monomers, allylic monomers and acrylamide monomers. Vinyl esters include vinyl acetate, vinyl propionate, vinyl butyrates, vinyl benzoates, vinyl isopropyl acetates, and similar vinyl esters. Vinyl halides include vinyl chloride, vinyl fluoride, and vinylidene chloride. Vinyl aromatic hydrocarbons include styrene, methyl styrenes and similar lower alkyl styrenes, chlorostyrene, vinyl toluene, vinyl naphthalene, divinyl benzoate, cyclohexene. Vinyl aliphatic hydrocarbon monomers include alpha olefins such as ethylene, propylene, isobutylene, and cyclohexyl as well as conjugated dienes such as butadiene, methyl-2-butadiene, 1,3-piperylene, 2,3 dimethyl butadiene, isoprene, cyclopentadiene, and dicyclopentadiene. Vinyl alkyl ethers include methyl vinyl ether, isopropyl vinyl ether, n-butyl vinyl ether, and isobutyl vinyl ether. High levels of carboxyl functional monomers should be avoided.

On a weight basis, the beta-hydroxy addition copolymer consists of copolymerized ethylenic monomers comprising between 1% and 50% beta-hydroxyl ester monomer with the balance being other ethylenically unsaturated monomer. Preferred beta-hydroxy copolymers are acrylic copolymers containing between 1% and 99% acrylic monomer with preferred beta-hydroxy ester acrylic copolymers comprising between 10% and 30% beta-hydroxy ester monomer, between 70% and 90% acrylic monomer, with the balance being other ethylenic monomer.

In accordance with this invention, transesterification is achieved by crosslinking hydroxyl functional polymers with ester functional polymers where crosslinking the respective binder components is activated in the presence of catalytic amounts of a nucleophilic catalyst and epoxy resin compound. In practice, the nucleophilic catalyst reacts with the catalytic epoxy compound oxirane group to form the following complex:

$$- \underset{\underset{O-}{\overset{|}{}}}{CH} - CH_2 - X$$

where X is the conjugate base of a weak acid; or X is the anion of the organic salt of a halide, azide, cyanide, or hydroxide. The complex then reacts with the ester group of the ester functional crosslinker to cleave the ester group and form a catalytic species of a low molecular weight alkoxy radical cleaved from the ester crosslinker. Then, the cleaved alkoxy radical interreacts with the hydroxyl group on the hydroxyl polymer to form an activated alkoxy polymer, and a low molecular weight alcohol. The volatile alcohol (generally ethylene or propylene glycol) can easily leave the curing polymer film. Meanwhile, the polymeric alkoxy radical from the hydroxyl polymer activates a second ester group on a ester functional polymer whereupon the activated second ester group liberates a small molecular alkoxy species and an ester bond is formed. The cleaved alkoxy radical repeats the activation between a second hydroxyl group, and a third ester group which further promotes the crosslinking between the ester functional crosslinker and the hydroxyl polymers while regenerating alkoxy radicals and liberating more volatile alcohol molecules.

Cure conditions vary with the concentration of relative amounts of the catalyst combination as well as the type of alcohol which leaves during the transesterification reaction. Lower boiling alcohols allow faster, lower temperature cures than higher boiling alcohols. Transesterification cures can be obtained at temperatures as low as 200°F at 5 minutes although higher temperatures and longer cure times are required if the coating is formulated for longer shelf life beyond two weeks. Alternatively, milder curing conditions are possible if at least one of the two catalyst components is withheld from the coatings composition until soon before or during application.

The merits of using a beta-hydroxy ester addition copolymer adapted to be crosslinked with a hydroxyl functional polymer upon being activated by transesterification cure catalysts comprising a nucleophilic compound and catalytic epoxy compound are further illustrated in the following examples. In the following illustrative examples, unless otherwise indicated, parts and percentages are by weight and temperature is given in degrees Centigrade. For evaluation purposes in the examples, coatings were applied at 1-2 mil thickness to phosphate treated cold-rolled steel panels and baked for 20 minutes at 360°F. Film properties were evaluated using the following evaluation:

(1) marring after 100 MEK double rubs;

(2) pencil hardness;

(3) MEK double rubs (MEK DR) consists of a cotton rag wrapped around the index finger, soaked with methylethyl ketone and then wiped with a 2-inch stroke across the coated surface. Up and back motions with moderate pressure are counted as one rub. The rag was resoaked with MEK after each 20 rubs. The number of rubs was recorded to the point where the coating is just removed, or after 100 rubs record percentage of mar if the coating has not been removed.

(4) impact resistance to a falling 5/8 inch dart, values recorded are maximum impact values which gave no film cracking.

## EXAMPLE 1

Prepare a polyester resin from the following:

|  | Grams |
|---|---|
| butyl stanoic acid | 2.0 |
| DBE-3 (Dupont) | 1053 |
| dimethyl isophthalate | 1164 |
| trimethyl propane | 1074 |

1. Heat to 180°C under N₂ blanket with stirring.

10

2. Collect methanol over a 2 hour period, while raising temperature to 190°C. Cool when total distillate collected reaches 446 g.

## EXMPLE 2

Prepare an acrylic from the following:

|    |                       | Grams |
|----|-----------------------|-------|
| a) | methylamyl ketone     | 670   |
| b) | t-butyl perbenzoate   | 40    |
|    | methyl methacrylate   | 1179  |
|    | styrene               | 300   |
|    | 2-hydroxyethyl acrylate | 414 |
|    | butyl acrylate        | 170   |

1. Heat (a) to 140°C and hold under $N_2$ blanket.

2. Pump in (b) mix over 3 hours while holding 140°C with stirring. Hold 15 minutes. Add 2 g t-butyl perbenzoate. Hold 30 minutes at 140°C.

3. Strip off solvent and residual monomer under vacuum. Total distillate 703 g. (170°C maximum temperature).

4. Cool.

5. Prepare solution for testing by blending 50 g methylethyl ketone and 50 g. acrylic.

## EXAMPLE 3

Prepare solution of GMA acrylic. Blend 50 g. methylethyl ketone and 50 g. Almatex PD7610 (Mitsui Toatsu Chemical).

## TABLE 1

Proper cure in film is measured by solvent resistance, MEK DR, and pencil hardness. Gloss of over 80% is desirable for some applications, but is not necessary.

Polyester resin with epoxy but no cocatalyst has no cure, example 4, while polyester with k+ propionate and no epoxy has very poor cure, example 17. Acrylic resin with k+ propionate, but no epoxy likewise had very poor cure, example 20.

Inorganic cocatalysts k+ borate and $k_3HPO_4$ gave good cure while cocatalysts of the stronger acids, $KH_2PO_4$, and $K_2HPO_4$ gave no cure.

Organic cocatalysts can be prepared from weak acids having a broader range of pka's. Substances from lactic acid, pka 3.08 to phenol, pka 10.0 are useful. DNNDSA is too strong of an acid (pka<1.0) to yield a useful conjugate base.

## TABLE 1

### ENCAT Film Properties

| Example | Resin* | Epoxy* | Weak Acid pka | Cocatalyst | MEK DR/mar | Pencil Hardness | 60° Gloss, % | Comments |
|---|---|---|---|---|---|---|---|---|
| 4 | A | 5% BPADE | — | none | 2/thru | — | — | sticky |
| 5 | A | 5% BPADE | 4.87 | Na+ Propionate | 100/thru | 2H | 62 | |
| 6 | A | 5% BPADE | 4.19 | Na+ Benzoate | 100/thru | B | 52 | |
| 7 | A | 5% BPADE | 4.75 | Na+ Acetate | 100/100% | F | 56 | |
| 8 | A | 5% BPADE | <1.0 | Na+ DNNDSA | 2/thru | — | — | sticky |
| 9 | A | 5% BPADE | 4.87 | K+ Propionate | 100/100% | 2H | 51 | |
| 10 | A | 5% BPADE | 3.08 | K+ lactate | 100/100% | 2H | 82 | |
| 11 | A | 5% BPADE | 3.75 | K+ formate | 100/100% | 2H | 99 | |
| 12 | A | 5% BPADE | 9.22 | K+ borate | 100/100% | HB | 103 | |
| 13 | A | 5% BPADE | 2.1 | $KH_2PO_4$ | 2/thru | — | — | sticky |
| 14 | A | 5% BPADE | 7.2 | $K_2HPO_4$ | 2/thru | — | — | sticky |
| 15 | A | 5% BPADE | 11.9 | $K_3PO_4$ | 100/30% | 2H- | ~80% | |
| 16 | A | 5% BPADE | 10.0 | K+ phenolate | 100/<10% | H | ~80% | |
| 17 | A | none | 4.87 | K+ propionate | 40/thru | 2B | 10 | soft |
| 18 | B | 10% C | 9.22 | K+ borate | 80/thru | 2H | 98 | add 10% dimethyl adipate |
| 19 | B | 10% C | 4.87 | K+ propionate | 100/<10% | 2H | 98 | |
| 20 | B | none | 4.87 | K+ propionate | 15/thru | H | 28 | soft |

Cure at 360°F for 20 minutes over 24 ga. Bonderite -1000 panels (Parker Chem.) at ~1.0 mil film thickness.

$1.25 \times 10^3$ mole of conjugate base of weak acid added in each example.

DNNDSA = dinonylnaphthalene disulfonic acid

A = polyester in Example 1      B = acrylic in Example 2      C = GMA acrylic in Example 3

BPADE = Shell's Epon 828

## EXAMPLES 21-32

## PROCEDURE "A"

## MONOESTERS OF DICARBOXYLIC ACIDS FROM THEIR ANHYDRIDES

Monoesters of succinic acid and maleic acid were prepared by simply heating a mixture of the cyclic acid anhydride and an alcohol. Thus, 200 g succinic anhydride was combined with 76.8 g of Fisher absolute methanol (20% mole excess). This mixture was heated with stirring in a 500 ml. 3-neck flask to 100°C and held for 1 hour. Methanol refluxed at 65°C, but boiling subsided as the anhydride flakes dissolved, and the temperature gradually climbed to 100°C. The ester product was cooled to 70°C before it was poured into a 9 x 13 inch flat glass baking dish. The white crystalline product was air dried for 2 hours to remove excess alcohol.

## PROCEDURE "B"

## EPOXY FROM MONOESTERS OF DICARBOXYLIC ACIDS

Epoxy esters were formed from monoesters of dicarboxylic acids.

| | |
|---|---|
| 120 g | monomethyl succinate (from "A" above) |
| 167 g | EPON 828 (bisphenol A diglycidyl ether) |
| 0.8 g | benzyldimethylamine |

Heat the above to 100°C under a nitrogen blanket and hold for 3 hours. Cool. Titrate product for acid and epoxy. Values should fall between 0.2 and 0.4 MEQ/g. The polymer product of this reaction contains two methyl esters from the monomethyl succinate and the two hydroxyls from the opened epoxide ring. Prepare solution for testing by dissolving in MEK at 50% NV.

## PROCEDURE "C"

Prepare a polyester resin from the following:

| | Grams |
|---|---|
| butyl stanoic acid | 2.0 |
| Dimethyl adipate | 1053 |
| dimethyl isophthalate | 1164 |
| trimethyl propane | 1074 |

1. Heat to 180°C under $N_2$ blanket with stirring.

2. Collect methanol over a 2 hour period, while raising temperature to 190°C. Cool when total distillate collected reaches 446 g.

## PROCEDURE "D"

Prepare an acrylic polymer from the following:

|    |                        | Grams |
|----|------------------------|-------|
| a) | methylamyl ketone      | 670   |
| b) | t-butyl perbenzoate    | 40    |
|    | methyl methacrylate    | 1179  |
|    | styrene                | 300   |
|    | 2-hydroxyethyl acrylate| 414   |
|    | butyl acrylate         | 170   |

1. Heat (a) to 140°C and hold under $N_2$ blanket.

2. Pump in (b) mix over 3 hours while holding 140°C with stirring. Hold 15 minutes. Add 2 g t-butyl perbenzoate. Hold 30 minutes at 140°C.

3. Strip off solvent and residual monomer under vacuum. Total distillate 703 g. (170°C maximum temperature).

4. Cool.

5. Prepare solution for testing by blending 50 g methylethyl ketone and 50 g. acrylic.

## TABLE 2

| Example | Resin        | Salt     | MEK DR   | Mar  | Pencil Hardness |
|---------|--------------|----------|----------|------|-----------------|
| 21      | D            | none     | 15/thru  | ---  | ----            |
| 22      | D            | KCl      | 60/thru  | ---  | F               |
| 23      | D            | KBr      | 40/thru  | ---  | F               |
| 24      | D            | KI       | 50/thru  | ---  | F               |
| 25      | D            | KCN      | 100      | 50%  | 2H              |
| 26      | D            | KOH      | 100      | 10%  | 2H              |
| 27      | D            | Na azide | 100      | 90%  | 3H              |
| 28      | D            | Ca Br$_2$| 60/thru  | ---  | HB              |
| 29      | D            | Ca I$_2$ | 60/thru  | ---  | HB              |
| 30      | D, no epoxy  | KCN      | 60/thur  | ---  | ----            |
| 31      | B            | NaN$_3$  | 100      | 50%  | H               |
| 32      | C            | NaN$_3$  | 100      | 10%  | H               |

## EXAMPLE 33

Prepare resins for testing by combining with 5% EPON 828 (epoxy resin, equivalent weight 200). Salts listed in Table 1 were dissolved in 2 g 50/50 MeOH/$H_2O$ to give 0.002 moles salt solution. This solution was blended with 10 g of the epoxy/resin catalyst mixtures. The catalyzed resins were spread on cold rolled steel panels to give 1-2 mill films, and then baked at 350°F for 20 minutes. Film properties were measured after at least 5 minutes cooling.

Cures and hardness were obtained with the potassium halide salts. The more basic nucleophiles, (cyanide, azide, and hydroxide) gave superior solvent resistance and better hardness. KCN without epoxy produced films which were clearly inferior to Example 25 which contained 5% epoxy.

## EXAMPLE 34

Composition:

| | Parts |
|---|---|
| Dodecanedioic Acid | 78.83 |
| Triphenyl phosphonium ethyl acetate | 0.94 |
| Propylene oxide | 20.23 |

Procedure:

Use a 3L flask, a condensation column fitted with a cold finger, nitrogen sparge, thermometer, agitator, and heating mantle. Heat the dodecanedioic acid and triphenyl phosphonium ethyl acetate in the flask to 145° C so that the dodecanedioic acid melts. Add the propylene oxide over eight hours. After four hours reduce the temperature to 100° C. After five hours begin to measure acid number hourly until the acid number reaches 38.3. Cool.

## EXAMPLE 35

Composition:

| | Parts |
|---|---|
| Azelaic Acid | 62.19 |
| Propylene glycol | 37.71 |
| Butyl Stannoic Acid | 0.10 |

Procedure:

Use a 3L flask, a condensation column, a fractionation column, a nitrogen sparge, a thermometer, an agitator, and a heating mantle. Heat the above raw materials until the glycol and acid melts. Continue heating until distillate begins to come across to the condensation column. Hold the column head temperature above 95° C by heating the reaction flask until 11.91 parts of distillate have been collected and the acid number is 2.4. Cool.

## EXAMPLE 36

Composition:

|  | Parts |
|---|---|
| Adipic Acid | 48.96 |
| Propylene glycol | 50.97 |
| Butyl Stannoic Acid | 0.07 |

Procedure:

Use a 3L flask, a condensation column, a fractionation column, nitrogen sparge, a thermometer, an agitator, and a heating mantle. Heat the above raw materials until the acid and glycol have melted. Continue heating until distillate begins to come across to the condensation column. Hold the column heat temperature above 95°C by heating the reaction flask until 12.06 parts of distillate have been collected and the acid number is less than 9. Cool.

EXAMPLE 37

Composition:

|  | Parts |
|---|---|
| Trimethylol propane | 16.66 |
| Adipic Acid | 54.47 |
| Propylene glycol | 28.84 |
| Butyl Stannoic Acid | 0.03 |

Procedure:

Use a 3L flask, a condensation column, a fractionation column, nitrogen sparge, a thermometer, an agitator, and a heating mantle. Heat the above raw materials until the glycol and acid melt. Continue heating until the distillate begins to come across to the condensation column. Hold the column heat temperature above 95°C until 14.33 parts of distillate come across and the acid number has reached 1.6. Cool.

EXAMPLE 38

Composition:

16

EP 0 328 950 A1

| | | Parts |
|---|---|---|
| A. | Exxate 700* | 13.69 |
| B. | Styrene | 16.48 |
| | Methylmethacrylate | 18.32 |
| | Butyl Acrylate | 7.35 |
| | Hydroxy ethyl methacrylate | 12.63 |
| | Methacrylic Acid | 0.07 |
| | t-butyl Perbenzoate | 1.07 |
| C. | Xylene | 22.00 |
| | Butyl acetate | 8.39 |

* Exxate 700 is a trademark of Exxon Co. referring to oxo-heptylacetate.

Procedure:

Use a 5L flask, a thermometer, an agitator, a condensation column, nitrogen sparge, a heating mantle, a pump, and a monomer flask. Heat the A in the flask to a temperature of 155° C. Add B over three hours to the solvent heel. Hold for one hour or more until a viscosity of 65 p (T = 100 C on the cone and plate) is reached. Add group C. Cool.

EXAMPLE 39

Composition:

| | | Parts |
|---|---|---|
| A. | Methyl Amyl Ketone | 18.59 |
| B. | Strene | 27.81 |
| | Butyl Acrylate | 29.74 |
| | 2-Hydroxy Ethyl Acrylate | 14.87 |
| | Methacrylic Acid | 1.93 |
| | Di Cup R peroxide | 0.74 |
| C. | 2-mercaptoethanol | 2.90 |
| D. | DTBP | 0.45 |
| E. | Hydrogen Peroxide | 2.97 |

Procedure:

Use a 5L flask, a thermometer, a condensation column, an agitator, nitrogen sparge, a heating mantle, a monomer pump, a monomer flask. Heat A to 145-150° C. Pump B and C into the reaction flask over 3-1/2 hours. Add D to the monomer feed towards the end of the feed step. Add E over an hour and hold for two hours. Vacuum strip and then cool.

EXAMPLE 40

Composition:

17

|  |  | Parts |
|----|----|----|
| A. | Methyl Amyl Ketone | 30.00 |
| B. | Styrene | 11.50 |
|  | Methylmethacrylate | 16.90 |
|  | Butylmethacrylate | 19.00 |
|  | Glycidyl Methacrylate | 20.30 |
|  | t-butyl Perbenzoate | 2.00 |
| C. | t-Amyl Perbenzoate | 0.30 |

Procedure:

Use a 5L flask, a condensation column, an agitator, a nitrogen sparge, a thermometer, a heating mantle, a monomer pump, and a monomer flask. Heat A to 146° C. Start pumping B into the reaction flask over two hours. Hold for 1/2 hour and add C. Cool.

## EXAMPLE 41

Composition:

|  | Parts |
|----|----|
| Trimethylol propane | 79.35 |
| Dimethyl adipate | 20.56 |
| Butyl Stannoic Acid | 0.09 |

Procedure:

Use a 3L flask, a condensation column, a fractionation column, a nitrogen sparge, a thermometer, agitator, and a heating mantle. Heat the above raw materials until the glycol melts. Continue heating until distillate begins to come across to the condensation column. Hold the column head temperature above 95° C by heating the reaction flask until 13.27 parts of distillate have been collected. Cool.

## EXAMPLE 42

|  | Parts |
|----|----|
| Dodecanedoic acid | 56.37 |
| Ethylene carbonate | 43.13 |
| Tetra ethyl ammonium iodide | 0.5 |

Procedure:

Use a 3L flask, a condensation column, a nitrogen sparge, a thermometer, agitation, and a heating mantle. Heat the above raw materials with good agitation, to 175° C. Hold until the Acid number is below 5.0. Cool and discharge.

## EXAMPLE 43

| A. | MAK | 250 | 19.47 |
|----|-----|-----|-------|
| B. | Styrene | 340 | 26.48 |
| | BA | 110 | 8.57 |
| | HEMA | 190 | 14.80 |
| | MMA | 360 | 28.04 |
| | t-amyl perbenzoate | 34.1 | 2.64 |

Procedure:

Use a 3L flask, a condensation column, an agitator, a nitrogen sparge, a themometer, a heating mantle, a monomer panel, and a monomer flask. Heat A to 149°C. Start pumping B into the reaction flask over two hours. Hold for 1/2 hour and cool.

## EXAMPLE 44

| Adipic acid | 30.60 |
|-------------|-------|
| Isophthalic acid | 17.42 |
| Trimethylol propane | 28.09 |
| propylene glycol | 23.87 |
| butyl stannoic acid | 0.02 |

Procedure:

Use a 3L flask, a condensation column, a fractionation column, a nitrogen sparge, a thermometer, an agitator, and a heating mantle. Heat the above until the glycol and acid melts. Continue heating until distillate begins to come across to the condensation column. Hold the column head temperature above 95°C reacting until distillate stops coming across and the acid number is below 10. Cool.

## EXAMPLES 45 - 53

Coating compositions were prepared from the products of Examples 34 - 44 as follows (all components as shown as parts by weight):

### Example 45

| Product of Example 35 | 19.65 parts |
|-----------------------|-------------|
| Product of Example 38 | 65.49 parts |
| Product of Example 40 | 13.75 parts |

19

## Example 46

| Product of Example 34 | 16.45 parts |
|---|---|
| Product of Example 38 | 67.65 parts |
| Product of Example 40 | 14.75 parts |
| benzyl trimethyl ammonium acetate | 1.11 parts |

## Example 47

| Product of Example 36 | 19.35 parts |
|---|---|
| Product of Example 38 | 63.37 parts |
| Product of Example 40 | 16.20 parts |
| benzyl trimethyl ammonium acetate | 1.15 parts |

## Example 48

| Product of Example 37 | 16.46 parts |
|---|---|
| Product of Example 38 | 66.60 parts |
| Product of Example 40 | 16.17 parts |
| benzyl trimethyl ammonium acetate | 1.08 parts |

## Example 49

| Product of Example 34 | 12.14 parts |
|---|---|
| Product of Example 39 | 52.44 parts |
| Product of Example 40 | 34.46 parts |
| benzyl trimethyl ammonium acetate | 0.77 parts |

## Example 50

| Product of Example 38 | 72.13 parts |
|---|---|
| Product of Example 40 | 12.66 parts |
| Product of Example 41 | 14.44 parts |
| benzyl trimethyl ammonium acetate | 0.96 parts |
| triphenyl phosphine | 0.77 parts |

## Example 51

| Product of Example 38 | 74.34 parts |
|---|---|
| Product of Example 40 | 14.47 parts |
| Dimethyl 1, 12 dodecanoate | 10.25 parts |
| Triphenyl phosphine | 0.97 parts |

## Example 52

| Product of Example 42 | 9.78 parts |
|---|---|
| Product of Example 43 | 68.65 parts |
| benzyl trimethyl ammonium acetate | 1.94 parts |
| glycidyl function acrylic resin (Mw about 5000) | 19.63 parts |

## Example 53

| Product of Example 44 | 92.8 parts |
|---|---|
| benzyl trimethyl ammonium acetate | 2.2 parts |
| Epont 828 (epoxy resin) | 5.0 parts |

Results obtained by drawing down these compositions on EP-2 steel panels and baking them in an oven are shown in Table 3.

TABLE 3

| Example/Bake Sched. | MEK rubs | Impact (For./Rev.) | Hardness |
|---|---|---|---|
| Example 45 | | | |
| 260 F/30" | 40 | 160/100 | H |
| 280 F/30" | 60 | 100/80 | H |
| 300 F/20" | 40 | 160/100 | H |
| Example 46 | | | |
| 260 F/30" | 60 | 160/120 | H |
| 280 F/30" | 40 | 160/160 | H |
| 300 F/20" | 60 | 140/100 | H |
| Example 47 | | | |
| 260 F/30" | 30 | 80/60 | H |
| 280 F/30" | 20 | 160/60 | H |
| 300 F/20" | 50 | 160/140 | H |
| Example 48 | | | |
| 260 F/30" | 60 | 60/80 | H |
| 280 F/30" | 200 | 100/60 | H |
| 300 F/20" | 200 | 60/40 | H |
| Example 49 | | | |
| 300 F/20" | 20 | - | - |
| Example 50 | | | |
| 300 F/20" | 10 | - | HB |
| Example 51 | | | |
| 300 F/20" | 0 | - | - |
| Example 52 | | | |
| 300 F/20" | 100 + | 20/5 | F |
| Example 53 | | | |
| 300 F/20" | - | 160/160 | H |

## EXAMPLE 54

Self-Cure Polyester

Melt 600 grams of neopentyl glycol, 714 grams of trimethylol ethane and 32 grams of ethylene glycol in a five liter round-bottomed flask equipped with an agitator, thermometer, nitrogen sparge, and a fractionating column and condenser. Add 1360 grams of terephthalic acid along with 1.25 grams of butyl stannoic acid catalyst at 150°C. Distill 296 grams of water beginning at 205°C to 233°C. When about 60% of the water has been removed gradually, add 151 grams of ethylene glycol. Add 584 grams of isophthalic acid and heat to 246-250°C., holding for an acid number less than 3. Cool to add 24 grams of trimellitic anhydride. Heat to 240-250°C., holding for a viscosity of 230-250 poise at 150°C., measured on an ICI cone and plate viscometer. Pour out and flake.

90 parts of the above polyester were extruded with 10 parts epoxy resin (Araldite GT-7013), 1.04 parts of Resiflow, 0.55 parts of benzoin, and 1.15 parts of catalyst - a 75/25 blend of dodecyltrimethylammonium benzoate and zinc benzoate. The extrudate was ground into a powder, sieved, sprayed onto metal panels, and baked at 375° F for 20 minutes to form a lightly textured film. Good cure was evidenced by resistance to 200 MEK rubs and 160/160 inch-lbs (direct/reverse) impact. 1008 hours of salt spray caused no field blistering, and 1008 hours in Cleveland Condensing Humidity showed only 1/32 inch of scribe creep.

## EXAMPLE 55

Blend 10.0 g. Polymer A solution (50% in methylethyl ketone, MEK) with 1.0 g PD7610, (glycidyl methacrylate acrylic resin, Mitsui Toatso Chemical, 50% in MEK), and 0.10 g benzyltrimethyl ammonium acetate, BTMAAc.

Polymer A

Prepare an acrylic polymer from the following:

|   |   | Grams |
|---|---|---|
| a) | methylamyl ketone | 670 |
| b) | t-butyl perbenzoate | 40 |
|   | methyl methacrylate | 1179 |
|   | styrene | 300 |
|   | 2-hydroxyethyl acrylate | 414 |
|   | butyl acrylate | 170 |

1. Heat (a) to 140° C and hold under $N_2$ blanket.
2. Pump in (b) mix over 3 hours while holding 140° C with stirring. Hold 15 minutes. Add 2 g t-butyl perbenzoate. Hold 30 minutes at 140° C.
3. Strip off solvent and residual monomer under vacuum. Total distillate 703 g. (170° C maximum temperature).
4. Cool.
5. Prepare solution for testing by blending 50 g. methylethyl ketone and 50 g. acrylic.

## EXAMPLE 56

As in Ex. 55, but 0.10 g. ethyltriphenyl phosphonium acetate, no BTMAAc.

## EXAMPLE 57

As in Ex. 55, but add 0.40 g trimethylol propane, TMP.

## EXAMPLE 58

As in Ex. 57, but no BTMAAc.

## EXAMPLE 59

As in Ex. 57, but no PD7610.

## EXAMPLE 60

As in Ex. 55, but instead use a hydroxy ethyl methacrylate, functional acrylic, Polymer B.

Polymer B

Prepare as in polymer A but use:

|  |  | Grams |
|---|---|---|
| a) | methylamyl ketone | 670 |
| b) | t-butyl peroxide | 40 |
|  | methylmethacrylate | 1259 |
|  | 2-hydroxyethylmethacrylate | 466 |
|  | butyl acrylate | 274 |

EXAMPLE 61

As in Ex. 55, but instead use a hydroxypropyl methacrylate, functional high solids acrylic.

Polymer C

|  |  | Grams |
|---|---|---|
| a) | Xylene | 1100 |
| b) | Styrene | 866 |
|  | ethyl acrylate | 758 |
|  | hydroxypropyl methacrylate | 544 |
|  | methacrylic acid | 28 |
| c) | dicumene peroxide | 86.5 |

1. Heat xylene to 130° C under nitrogen blanket.
2. Combine 440 g. (b) with (c), add to reactor, wait 15 minutes.
3. Pump the rest of (b) in the reactor over 3 hours.
4. Heat to 145° C, hold 2 hours, cool.

Paint films were baked at 300° F for 30 minutes and film properties are as follows:

| Ex. | MEK DR | Marring | Impact Resistance (inch pounds) | |
|---|---|---|---|---|
| 55 | >100 | 20% | 20 direct | 10 reverse |
| 56 | >100 | 70% | --- | --- |
| 57 | >100 | 10% | 60 direct | 40 reverse |
| 58 | 7 | -- | -- | -- |
| 59 | 10 | -- | -- | -- |

24

| Bake: 30 minutes at 240° F | 30 minutes at 225° F |
|---|---|
| Ex. 55 100 MEK rubs/20% mar | 100 MEK rubs, through film |
| Ex. 60 100 MEK rubs/90% mar | 80 MEK rubs, through film |
| Ex. 61 through at 100 MEK rubs | 30 MEK rubs, through film |

## EXAMPLE 62

Blend 10 g. Polymer C with 0.30 g. neopentyl glycol, 0.70 g. Epon 828 (epoxide, Shell Chemical), and 0.25 g. Zn benzoate. Bake 20 minutes at:

| 300° F | 7 MEK rubs/thru |
|---|---|
| 350° F | 100 MEK rubs/thru |
| 400° F | 100 MEK rubs/20% mar |

## EXAMPLES 63-72

## Table 4

Compositions having the stated components were prepared and tested (a note of means of preparation of the compounds is given below).

| Ex. | Acrylic | Polyester | % Polyester | Pencil Hardness | Impact Forw./Rev. |
|---|---|---|---|---|---|
| 63 | A | None | --- | 3H | 30/10 |
| 64 | A | A | 16 | 4H | 160/160 |
| 65 | A | B | 13.6 | 4H | 160/160 |
| 66 | A | C | 6 | 4H | 160/160 |
| 67 | A | D | 15 | 4H | 160/160 |
| 68 | A | E | 15 | 4H | 160/160 |
| 69 | A | F | 15 | 4H | 160/160 |
| 70 | B | None | --- | 3H | 20/10 |
| 71 | B | G | 15 | 3H | 160/160* |
| 72 | A | A | 30 | 2H | 160/160 |

*Film was hazy at bend, but no cracks or fractures.

Examples 63-69 had 11.5% Epon 828 (Shell epoxy, 200 eq. wt.) and 2.2% benzyltrimethyl ammonium acetate as the ENCAT cocatalyst. Paints were all whites with $TiO_2$ P/B = 0.85/1.

Examples 70-71 had 10% PD 7610, a glycidyl functional acrylic as the epoxy source, and 3% benzyltrimethyl ammonium acetate. No $TiO_2$.

Example 72 had 11.5% Epon 828 (Shell epoxy, 200 eq. wt.) and 30% dodecyl trimethyl ammonium acetate as the ENCAT cocatalyst. Paints were all whites with $TiO_2$ P/B = 0.85/1.

All films were baked at 300° F for 20 minutes. All had > 100 MEK rub resistance with some slight marring.

High temperature bake (375° F for 20 minutes)

|  | MEK Rubs | Impact Resistance |
|---|---|---|
| Example 64 | <10 | -- |
| Example 72 | >100 | 160/160 |

Acrylic A:

Prepare from the following:

|  |  |  | Grams |
|---|---|---|---|
| a. | Xylene |  | 1098 |
| b. | Styrene |  | 866 |
|  | ethyl acrylate |  | 758 |
|  | hydroxy propyl methacrylate |  | 544 |
|  | methacrylic acid |  | 28 |
| c. | t-butyl perbenzoate |  | 87 |
| d. | xylene |  | 222 |

Place (a) in a 5.1 vessel and heat with nitrogen purge. Combine 440 g. of (b) with (c) and add to vessel. Hold 15 minutes, then pump remainder of (b) in over 3 hours. Heat to 145°C, hold 2 hours, cool and add (d).

Acrylic B

Prepare an acrylic from the following:

|  |  | Grams |
|---|---|---|
| a. | methylamyl ketone | 670 |
| b. | t-butyl perbenzoate | 40 |
|  | methyl methacrylate | 1179 |
|  | styrene | 300 |
|  | 2-hydroxyethyl acrylate | 414 |
|  | butyl acrylate | 170 |

1. Heat (a) to 140°C and hold under $N_2$ blanket.
2. Pump in (b) mix over 3 hours while holding 140°C with stirring. Hold 15 minutes. Add 2 g t-butyl perbenzoate. Hold 30 minutes at 140°C.
3. Strip off solvent and residual monomer under vacuum. Total distillate 703 g. (170°C maximum temperature).
4. Cool.
5. Prepare solution for testing by blending 50 g methylethyl ketone and 50 g. acrylic.

Polyester A:

Prepare a polyester from the following:

26

|  | Grams |
|---|---|
| Adipic acid | 146 |
| Isophthalic acid | 166 |
| neopentyl glycol | 312 |
| butyl stanoic acid | 0.2 |

Cook at 150 to 220°C in a flask equipped with a nitrogen blanket, a stirrer, a thermometer and a glass bead packed column. Keep the packed column head temperature at a maximum of 100°C. Cook to an acid number of less than 10. Cool.

Polyester B: (As in A but use:)

|  | Grams |
|---|---|
| 1,6-hexane diol | 1463 |
| neopentyl glycol | 1933 |
| isophthalic acid | 4108 |
| trimethylol ethane | 766 |

Polyester C: (As in A but use:)

|  | Grams |
|---|---|
| adipic acid | 146 |
| isophthalic acid | 664.8 |
| trimethylol propane | 1342 |

Polyester D: (As in A but use:)

|  | Grams |
|---|---|
| adipic acid | 877 |
| isophthalic acid | 498 |
| butylstanoic acid | 0.5 |
| trimethylol propane | 810 |
| propylene glycol | 687 |

Polyester E: (As in A but use:)

|  | Grams |
|---|---|
| azelaic acid | 188 |
| isophthalic acid | 166 |
| neopentyl glycol | 208 |
| propylene glycol | 76 |
| butyl stanoic acid | 0.2 |

Polyester F: (As in A but use:)

|  | Grams |
|---|---|
| azelaic acid | 753 |
| isophthalic | 831 |
| butylstanoic acid | 0.5 |
| trimethylol propane | 805 |
| propylene glycol | 684 |

Polyester G: (As in A but use:)

|  | Grams |
|---|---|
| dodecanedioic acid | 460.6 |
| 1,6-hexane diol | 295 |
| butyl stanoic acid | 0.3 |

The foregoing examples illustrate the merits of thermosetting paint compositions based on a thermosetting transesterification cure of a hydroxyl polyester polymer and a beta-hydroxy ester copolymer.

**Claims**

1. A protective surface coating composition containing a catalytic amount of a transesterification catalyst, where the coating composition contains a polymeric binder adapted to crosslink by transesterification upon heat curing, the coating composition comprising:
a polymeric binder containing hydroxyl functional groups and lower alkyl ester carboxylic ester functional groups adapted to transesterify and crosslink in the presence of a transesterification catalyst;
said transesterification catalyst comprising on the basis of 100 weight parts of said polymeric binder between 1 and 20 weight parts of catalytic epoxy compound containing oxirane functionality in combination with 0.1 to 10 weight parts of (a) a conjugate base of a weak acid comprising an inorganic cation salt, where the conjugate base of a weak acid has a pka between 2.5 and 14; or (b) an inorganic salt having an inorganic cation selected from sodium, potassium, lithium, calcium, and iron and an inorganic anion selected from a halogen, azide, cyanide or hydroxide;
where said polymeric binder is substantially free of carboxyl groups and is adapted to cure by transesterification.

2. The coating composition in claim 1, were the conjugate base of a weak acid is derived from a weak acid selected from acetic acid, benzoic acid, boric acid, formic acid, lauric acid, phenols, chlorophenols, nitrophenols and inorganic acids, preferably a sodium or a potassium reaction product with an acetate or a benzoate or a sodium or potassium salt of a carboxylic polymer or a sodium or potassium derivative of inorganic acid such as sodium borate or potassium borate.

3. A coating composition according to claim 1 or claim 2, wherein the catalytic epoxy compound is selected from 2-18 carbon alkylene oxides, aryl alkylene oxides, cycloaliphatic oxides, phenolic glycidyl ether, where the epoxy compound has at least one oxirane group per molecule and oligomers, monomers, and polymers, where the catalytic epoxy compound contains at least one oxirane group per molecule.

4. A coating composition according to any one of the preceding claims, wherein the inorganic salt (b) is a sodium salt, a potassium salt, a lithium salt, a calcium salt or an iron salt.

5. A coating composition according to any one of the preceding claims, wherein said inorganic salt (b) is a halogen salt selected from a chloride, bromide, or iodide.

6. A coating composition according to any one of the preceding claims, wherein the polymeric binder is selected from the group consisting of a polyester, a polyacrylate, a polyepoxy, a polyamide, a polyurethane, or mixtures thereof.

7. A coating composition according to any one of the preceding claims, wherein the polymeric binder is solvent-free and comprises an oligomer polyester polyol and a lower alkyl diester of an alkyl dicarboxylic acid.

8. A coating composition according to any one of claims 1-6, where the coating is a solvent based or solvent free acrylate polymer.

9. A coating composition according to any one of the preceding claims, wherein the Acid No. of the polymeric binder is less than 10.

10. A composition according to claim 6, wherein the polymeric binder comprises a beta-hydroxy ester polyester polymer having terminal or pendant beta-hydroxy ester functional groups.

11. A composition in claim 10, where the polymeric binder consists of a self-crosslinking, beta-hydroxy ester polyester polymer, and where hydroxyl functionality on some of the beta-hydroxy ester groups of said polyester polymer transesterify with ester functionality of other beta-hydroxy ester groups of said polyester polymer upon being activated by said catalyst combination.

12. A composition according to claim 11, where the self-crosslinking beta-hydroxy ester polyester polymer is a branched polymer.

13. A composition according to any one of claims 10-12, where the thermosetting binder contains between 1% and 99% beta-hydroxy ester polyester polymer, preferably between 4% and 90% beta-hydroxy ester polyester polymer with the remainder being a hydroxyl functional polymer.

14. A composition according to any of claims 10-13, where the beta-hydroxy ester polyester polymer is produced by reacting excess equivalents of an alpha, beta reactant with lesser equivalents of a dicarboxylic compound, where the alpha, beta reactant is selected from a 1,2 diol, a cyclic carbonate, or an alkyl oxide.

15. A composition according to claim 14, where the alpha, beta reactant is ethylene glycol or propylene glycol, ethylene carbonate or propylene carbonate or ethylene oxide or propylene oxide.

16. A composition according to claim 6, where the binder comprises a hydroxyl functional polymer of copolymerized ethylenically unsaturated monomers and beta-hydroxy ester polyester polymer.

17. A composition according to claim 16, where the polymer is an acrylic copolymer.

18. A composition according to claim 16, where the hydroxyl functional polymer is a polyurethane polymer or a polyester polymer.

19. A paint coating composition according to claim 6, wherein the polymeric binder comprises a self-curing acrylic copolymer containing beta-hydroxy ester groups, the acrylic copolymer comprising copolymerized ethylenically unsaturated monomers where said monomer on a weight basis comprises between 1% and 50% beta-hydroxyl ester monomer, between 0% and 99% acrylic monomer, with the balance being other ethylenically unsaturated monomer to provide a beta hydroxyl ester copolymer having terminal hydroxyl groups on the beta- hydroxy ester groups.

20. The paint composition in claim 19, where the self-curing beta hydroxy addition copolymer is an acrylic copolymer containing copolymerized acrylic monomer, preferably a self-curing acrylic copolymer comprising copolymerized monomers of 10% to 40% beta hydroxyl ester monomer, 60% to 90% acrylic monomer, with the balance being other ethylenically unsaturated monomer.

21. A composition according to either of claims 19 and 20, where the beta hydroxy ester monomer is represented by the general formula:

$$R - \overset{O}{\underset{}{C}} - O - CH_2 - CH_2 - OH$$

where one or more hydrogens on either the alpha carbon or beta carbon can be substituted with a methyl group, and R is an alkyl chain containing terminal ethylenic unsaturation, preferably an acrylic or methacrylic residue.

22. A composition according to any one of claims 19-21, where the beta-hydroxyl ester monomer is produced by reacting an acrylic or methacrylic acid with either ethylene oxide or propylene oxide.

23. A composition according to any one of claims 19-22, where the beta-hydroxyl ester monomer is a hydroxyl alkyl acrylate, preferably 2-hydroxy ethyl acrylate or methacrylate, or 2-hydroxy propyl acrylate or methacrylate.

24. A thermosetting paint composition according to claim 6, where the binder comprises on a weight basis:

between 2% and 50% of a hydroxyl functional polyester polymer having a hydroxyl number between about 5 and 200 and a number average molecular weight between about 300 and 30,000 as measured by GPC;

between 50% and 98% of a beta-hydroxy ester copolymer of copolymerized ethylenically unsaturated monomers comprising between 1% and 50% beta-hydroxyl ester monomer, between 0% and 90% acrylic monomer, with the balance being other ethylenic monomer.

25. A composition according to claim 24, where the beta-hydroxy ester copolymer is an acrylic copolymer containing between 1% and 90% preferably 70-90% copolymerized acrylic monomer and preferably 10 to 30% beta hydroxy ester monomer.

26. A composition according to either of claims 24 and 25, containing between 5% and 30% by weight said hydroxyl functional polyester polymer.

27. A composition according to any one of claims 25-26, wherein the beta hydroxy ester monomer is produced by coreacting an acrylic or methacrylic acid with ethylene oxide or propylene oxide to produce a beta hydroxy monomer having an ethylenically unsaturated double bond.

28. A composition according to any one of claims 24-27, where the beta hydroxy ester monomer is 2-hydroxy ethyl acrylate or methacrylate or 2-hydroxy propyl acrylate or methacrylate.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 079 629 (SHELL) * Claims 1,2; page 10, lines 24-27 * | | C 09 D 5/03 C 08 L 67/00 C 08 L 33/04 C 07 C 67/03 C 08 F 8/14 C 08 F 8/12 |
| A,D | EP-A-0 252 289 (GLIDDEN) | | |

TECHNICAL FIELDS
SEARCHED (Int. Cl.4)

C 07 C
C 09 D
C 08 F

The present search report has been drawn up for all claims

| Place of search | Date of completion of the search | Examiner |
|---|---|---|
| THE HAGUE | 30-05-1989 | BUSCAGLIONE Y. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document